# EUROPÄISCHE PATENTANMELDUNG

(11) **EP 4 470 798 A1**
(43) Veröffentlichungstag der Anmeldung: **04.12.2024**
(21) Anmeldenummer: 24173705.5
(22) Anmeldetag: 02.05.2024
(51) Int. Cl.: B60C 11/03, B60C 11/11

(54) **FAHRRADREIFEN**

(30) Priorität: 01.06.2023 DE 102023205120
(71) Anmelder: Continental Reifen Deutschland GmbH, 30175 Hannover (DE)
(72) Erfinder: Sudikatis, Florian, 30175 Hannover (DE)
(74) Vertreter: Continental Corporation

(57) **Zusammenfassung**

Fahrradreifen (1) mit einem Laufstreifen (2) mit einer Laufstreifenbasisfläche (2a) und einer Profilierung aus voneinander beabstandeten Stollen, zu welchen Schulterstollen (5) und mittige Stollen (6) gehören, wobei die Schulterstollen (5) jeweils eine parallel oder im Wesentlichen parallel zur Laufstreifenbasisfläche (2a) verlaufende Deckfläche (8) aufweisen.

Auf der Deckfläche (8) von Schulterstollen (5)ist zumindest eine keilförmige, eine Keilfläche (12a, 13a) als Deckfläche aufweisende Erhebung (12, 13) ausgebildet, deren Keilfläche (12a, 13a) in Richtung zur Laufstreifenaußenseite abfällt und, in Draufsicht und in der Umfangsrichtung des Laufstreifens betrachtet, langgestreckt gestaltet ist.

## Beschreibung

Die Erfindung betrifft einen Fahrradreifen mit einem Laufstreifen mit einer Laufstreifenbasisfläche und einer Profilierung aus voneinander beabstandeten Stollen, zu welchen Schulterstollen und mittige Stollen gehören, wobei die Schulterstollen jeweils eine parallel oder im Wesentlichen parallel Laufstreifenbasisfläche verlaufende Deckfläche aufweisen.

Fahrradreifen, die für die Fahrradkategorie GRAVEL oder MTB (Mountainbike) vorgesehen und geeignet sind, weisen üblicherweise ein Stollenprofil auf, sodass diese Fahrradreifen die für den off-road Einsatz auf unterschiedlichen, unbefestigten, losen oder rutschigen Untergründen, wie Forstwege oder Waldwege, benötigten Griffeigenschaften besitzen. Für derartige Fahrradreifen ist eine große Anzahl unterschiedlich gestalteter Stollenprofile bekannt. Einige solcher Stollenprofile weisen Fahrradreifen, die auf der Webseite der Firma Continental abgebildet sind, auf, siehe beispielsweise https://www.continental-reifen.de/b2c/bicycle/search-results.html?searchMode=sbs&pogSeament2MappingDTacs=Gravel (abgerufen am 28.04.2023). Ein Stollenprofil weist etwa auch der in Fig. 1 der DE 29509996 U1 gezeigte Fahrradreifen auf.

Kanten an den Stollen ermöglichen im off-road-Einsatz einen vorteilhaften formschlüssigen Kraftschluss und dadurch die erwünschten Griffeigenschaften. Je mehr Kanten vorhanden sind, umso besser sind die Griffeigenschaften. Übliche Stollenprofile weisen daher in Umfangs- und/oder Querrichtung orientierte Einschnitte oder Kerben in den Stollendeckflächen auf. In den Einschnitten oder Kerben verfangen sich Steine oder Steinchen, die oft nicht oder erst nach längerer Zeit ausgeworfen werden.

Auf matschigem Untergrund besteht die Möglichkeit des vollständigen Zusetzens der Einschnitte oder Kerben mit Material aus dem Untergrund. Bei Querbelastung schließen sich insbesondere in Umfangsrichtung orientierte Einschnitte, sodass ihre Kanten nur noch bedingt zur Griffperformance betragen können. Im Stollen doppelt ausgebildete Einschnitte schwächen den Stollen zwischen den Einschnitten, sodass der Materialsteg zwischen den Einschnitten verformt wird. Vor allem an den stark belasteten Schulterstollen sind Maßnahmen zur Sicherstellung einer guten Griffperformance besonders wichtig.

Der Erfindung liegt daher die Aufgabe zugrunde, ohne Einschnitte oder Kerben vorzusehen die Griffperformance der Schulterstollen zu verbessern.

Gelöst wird die gestellte Aufgabe erfindungsgemäß dadurch, dass auf der Deckfläche von Schulterstollen zumindest eine keilförmige, eine Keilfläche als Deckfläche aufweisende Erhebung ausgebildet ist, deren Keilfläche in Richtung zur Laufstreifenaußenseite abfällt und, in Draufsicht und in der Umfangsrichtung des Laufstreifens betrachtet, langgestreckt gestaltet ist.

Gemäß der Erfindung ist, um zusätzliche Kanten zur Verfügung zu stellen, auf der Deckfläche von Schulterstollen zumindest eine keilförmige Erhebung ausgebildet. Die an der Erhebung vorhandenen zusätzlichen Griffkanten können in ihrer Funktion durch Steine nicht beeinträchtigt werden.

Bei einer bevorzugten Ausführung erstreckt sich die Erhebung zur Umfangsrichtung unter einem Winkel von 5° bis 30°. Diese Schrägstellung der Erhebung bzw. der Erhebungen relativ zur Umfangsrichtung sorgt für eine weitere Verbesserung der Griffeigenschaften des Laufstreifens in den Schulterbereichen, insbesondere bei Kurvenfahrt auf losem Untergrund.

Besonders vorteilhaft ist eine Ausführung, bei welcher auf der Deckfläche von Schulterstollen zumindest zwei, insbesondere genau zwei, derartige Erhebungen ausgebildet sind, die in Richtung der Laufstreifenaußenseite aufeinanderfolgen.

Dadurch wird die Anzahl der zur Verfügung stehenden Griffkanten auf besonders vorteilhafte Weise erhöht.

Gemäß einer weiteren bevorzugten Ausführung weist die Keilfläche, also die Deckfläche jeder keilförmigen Erhebung, zwei insbesondere parallel zueinander und gerade verlaufende Längskanten auf, welche zur Umfangsrichtung unter dem bereits erwähnten Winkel von 5° bis 30° geneigt sind. Eine derartige Neigung der Längskanten verbessert ebenfalls zusätzlich den Griff.

In diesem Zusammenhang ist es ferner von Vorteil, wenn die Längskanten der Keilflächen sämtlicher Erhebungen parallel zueinander verlaufen und wenn bei zwei oder mehr Erhebungen diese an der Deckfläche unter einem Abstand zueinander angeordnet sind, welcher 1,50 mm bis 4,00 mm beträgt und insbesondere konstant ist.

Vorteilhafterweise sind ferner die Erhebungen an der Deckfläche derart ausgebildet, dass sie zum Rand der Deckfläche unter einem Abstand angeordnet sind, welcher bis zu 1,20 mm, insbesondere 0,30 mm bis 1,20 mm beträgt. Auf diese Weise bleiben auch die Außenkanten der Schulterstollen als gut wirkende Griffkanten erhalten.

Die Erhebungen sollen eine gute Stabilität aufweisen und für eine möglichst lange Laufleistung zur Verfügung stehen, also einem gleichmäßigen und eher geringen Abrieb unterliegen. Diesbezüglich ist es vorteilhaft, wenn die Erhebungen eine Breite von 2,00 mm bis 7,00 mm und eine Erstreckungslänge von 4,00 mm bis 12,00 mm aufweisen.

Bei einer weiteren bevorzugten Ausführung ist auf Schulterstollen zumindest eine Erhebung ausgebildet, deren Keilfläche bis auf das Niveau der Deckfläche des Stollens abfällt. Bei mehreren Erhebungen wird vorteilhafterweise die am weitesten laufstreifenaußenseitig befindliche Erhebung derart ausgebildet.

Bei einer weiteren bevorzugten Ausführung, bei welcher zwei oder mehr Erhebungen vorgesehen sind, weist die von der Laufstreifenaußenseite am weitesten entfernt befindliche Erhebung laufstreifeninnenseitig eine senkrecht zur Deckfläche des Schulterstollens ermittelte Höhe von 0,50 mm bis 2,50 mm, insbesondere bis 1,50 mm, auf, wobei sich die Höhe der Erhebung in Richtung zur nächsten keilförmigen Erhebung um mindestens 0,20 mm verringert. Bevorzugt weist dabei die der Laufstreifenaußenseite am nächsten befindliche Erhebung laufstreifeninnenseitig eine senkrecht zur Deckfläche des Schulterstollens ermittelte Höhe von 0,20 mm bis 1,50 mm, insbesondere bis 0,70 mm auf, wobei die Höhe der Erhebung in Richtung zur Laufstreifenaußenseite bis auf das Niveau der Deckfläche abfällt. Eine derartige Ausgestaltung der Erhebungen ist für den Griff und auch für einen gleichmäßigen Abrieb von Vorteil.

Weitere Merkmale, Vorteile und Einzelheiten der Erfindung werden nun anhand der schematischen Zeichnung, die Ausführungsbeispiele darstellt, näher beschrieben. Dabei zeigen
Fig. 1 einen Umfangsabschnitt eines Fahrradreifens in Schrägansicht, jedoch ohne die zum Unterbau gehörenden Bauteile,
Fig. 2 eine Seitenansicht des Umfangsabschnittes aus Fig. 1,
Fig. 3 eine vergrößerte Ansicht eines Schulterstollens und
Fig. 4a und Fig. 4b vergrößerte Ansichten eines im Laufstreifen mittig positionierten Stollens.

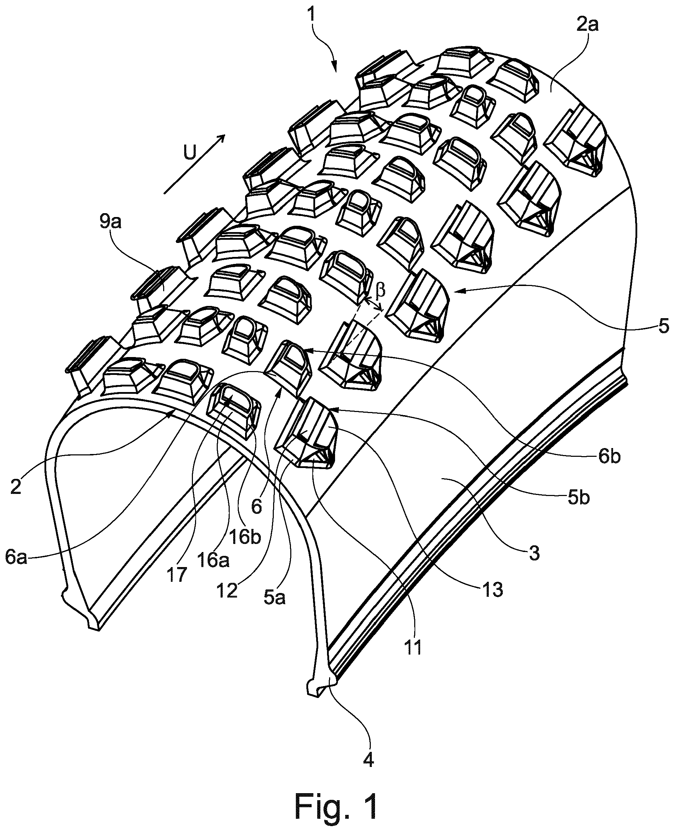

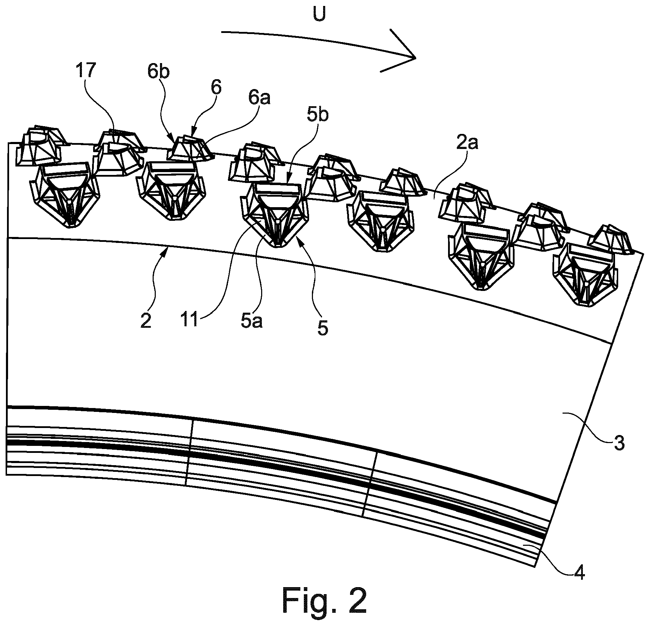

Fig. 1 und Fig. 2 zeigen von einem Fahrradreifen 1 einen profilierten Laufstreifen 2, Seitenwände 3 und Teilbereiche von Wulstbereichen 4. Nicht dargestellt sind beispielsweise die üblicherweise vorgesehene, mit einer Festigkeitsträgerlage versehene Karkasse und Wulstkerne in den Wulstbereichen 4, welche von der Karkasse umschlungen sind.

Der Fahrradreifen 1 ist insbesondere für die Fahrradkategorien GRAVEL und MTB geeignet und vorgesehen und weist daher eine Querschnittsbreite auf, die für Reifen der Fahrradkategorie GRAVEL 35 mm bis 55 mm und für Reifen der Fahrradkategorie MTB 50 mm bis 70 mm beträgt, Die Querschnittsbreite wird als Distanz zwischen den axial äußersten Punkten der Seitenwände 3 des Reifens in axialer Richtung gemessen, bei auf einer Felge montiertem, unter Standardinnendruck befindlichen Reifen gemäß E.T.R.T.O. in der zum Anmeldezeitpunkt dieser Patentanmeldung geltenden Fassung.

Wie insbesondere Fig. 1 zeigt, weist der Laufstreifen 2 des Fahrradreifens 1 ein Stollenprofil mit je einer schulterseitig verlaufenden Reihe aus Schulterstollen 5 und mit mittigen Stollen 6 im Laufstreifenbereich zwischen den Schulterstollen 5 auf. Die Laufstreifenbereiche zwischen den Stollen 5, 6 sind unstrukturiert und bilden eine Laufstreifenbasisfläche 2a. Die Figuren zeigen die Stollen 5, 6 in schematischen Strichdarstellungen mit scharfkantigen Konturen, wobei am vulkanisierten Reifen das Gummimaterial dafür sorgt, dass die Konturen und Übergänge zumeist und üblicherweise kaum merkbar gerundet sind.

Die jeweils eine kleinere Fläche im Laufstreifen 2 einnehmenden und ein kleineres Gummivolumen als die Schulterstollen 5 aufweisenden mittigen Stollen 6 bilden zwischen den Schulterstollen 5 in axialer Richtung orientierte Reihen, die in Umfangsrichtung abwechselnd und aufeinanderfolgend aus vier mittigen Stollen 6, zwei mittigen Stollen 6 und drei mittigen Stollen 6 bestehen, wobei auf eine Reihe aus drei mittigen Stollen 6 wieder eine Reihe aus vier mittigen Stollen 6 folgt. Jeder Stollen 5, 6 weist bevorzugt einen Stollensockel 5a, 6a, welcher an der Laufstreifenbasisfläche 2a eine den jeweiligen Stollen 5, 6 umlaufende niedrige Verbreiterung ist, und einen Stollenkörper 5b, 6b auf.

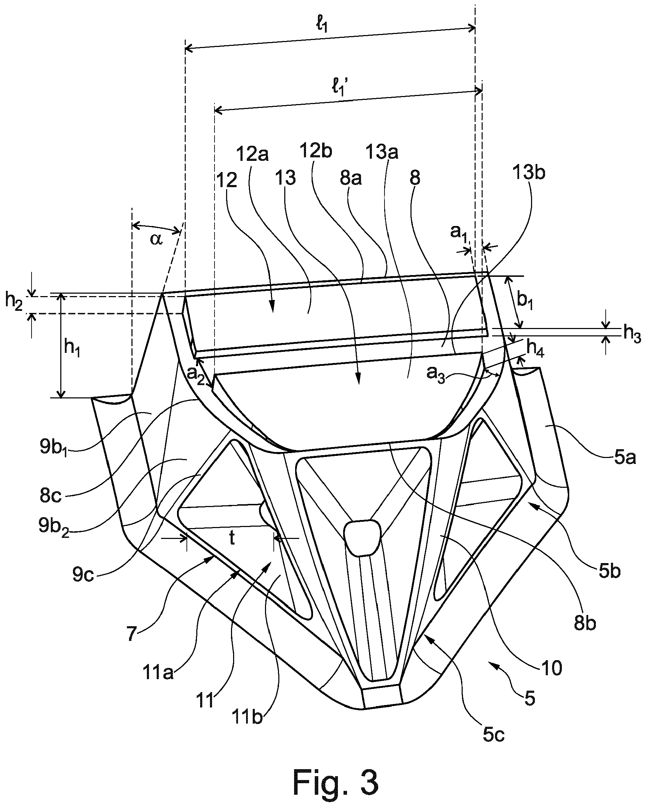

Anhand der Fig. 1 bis Fig. 3, insbesondere der Fig. 3, wird nun die Ausgestaltung eines Schulterstollens 5 näher beschrieben. Der Stollenkörper 5b des Schulterstollens 5 weist parallel zur Laufstreifenbasisfläche 2a eine Basisfläche 7 (Fig. 3) auf, die sich aus einem laufstreifeninnenseitig befindlichen in Umfangsrichtung länglichen rechteckigen oder rechteckähnlich gestalteten Flächenteil mit längeren Seiten und einem an diesen anschließenden laufstreifenaußenseitig befindlichen gleichseitig - dreieckigen oder dreieckähnlichen Flächenteil zusammensetzt. Der Stollenkörper 5b weist ferner eine trapezähnlich (gleichschenkeliges Trapez) gestaltete, parallel zur Basisfläche 7 verlaufende Deckfläche 8 auf, die von zwei parallel zueinander und zu den längeren Seiten des rechteckigen Flächenteils der Basisfläche 7 verlaufenden Stollenkanten, einer längeren Stollenkante 8a und einer kürzeren Stollenkante 8b, und von zwei die Enden der beiden Kanten 8a, 8b verbindenden geringfügig nach außen gebogen oder alternativ nach außen gewinkelt verlaufenden Seitenkanten 8c begrenzt ist. Eine ebene Flanke 9a (Fig. 1) verbindet die laufstreifeninnenseitige längere Stollenkante 8a der Deckfläche 8 mit der außenseitig vorliegenden längeren Seite des rechteckigen Flächenteils der Basisfläche 7. Je zwei Flanken 9b₁ und 9b₂ verbinden die kürzeren Seiten des rechteckigen Flächenteils der Basisfläche 7 mit den nach außen gerundeten oder gewinkelt verlaufenden Seitenkanten 8c der Deckfläche 8. Die Flanken 9a, 9b₁ und 9b₂ sind bevorzugt ebene Flächen, die zur Laufstreifenbasisfläche 2a abfallend zu einer Senkrechten auf die Laufstreifenbasisfläche 2a unter einem Winkel α (Fig. 3) von 5° bis zu 30° verlaufen.

Die Schulterstollen 5 weisen eine gegenüber der Laufstreifenbasisfläche 2a in vertikaler Richtung und bis zur Deckfläche 8 ermittelte Höhe h₁ auf, die in der für solche Laufstreifen üblichen Höhe in der Größenordnung von 2,00 mm bis 11,00 mm beträgt. Das Intervall von 2,00mm bis 11,00 mm, lässt sich nach Reifentypen unterteilen: 2,00mm bis 4,00 für Gravel Reifen mit einer nominalen Querschnittsbreite von 30,00mm bis 45mm, insbesondere 4,00 mm bis 7,00 mm für Gravel, Cross Country und Trail Reifen sowie 7,00mm bis 11,0mm für Enduro und Downhill Reifen wobei 9,00 mm bis 11,00 mm insbesondere eine Anwendung bei speziellen Matschreifen abdeckt. Die Höhe h₁ der Schulterstollen 5 ist bevorzugt konstant, alternativ nimmt die Höhe h₁ der Schulterstollen 5 ausgehend von ihren zur Laufstreifenmitte weisenden Stollenkanten 8a der Deckfläche 8 eine sich in Richtung zu den Stollenkanten 8b leicht verringernde Höhe auf.

Die Schulterstollen 5 sind derart auf der Laufstreifenbasisfläche 2a positioniert, dass sie zur exakten Umfangsrichtung, die in Fig. 1 und Fig. 2 durch einen Pfeil U gekennzeichnet ist, geringfügig schräg gestellt sind, sodass die Stollenkanten 8a, 8b der Deckflächen 8 und die Flanken 9a, in Draufsicht betrachtet, unter einem spitzen Winkel β (Fig. 1) von 5° bis 30°, in Richtung zur Laufstreifenmitte geneigt, verlaufen. Sind, wie beim gezeigten Ausführungsbeispiel an beiden Schultern des Laufstreifens 2 sämtliche Schulterstollen 5 übereinstimmend schräg gestellt so handelt es sich bei dem Laufstreifen 2 um einen laufrichtungsgebundenen Laufstreifen, wobei der Fahrradreifen derart am Rad zu montieren ist, dass bei Vorwärtsfahrt, die durch den Pfeil U angedeutet ist, die Stollenkanten 8a mit ihren weiter laufstreifeninnenseitig befindlichen Enden zuerst in den Untergrund eintreten.

Der Schulterstollen 5 weist infolge des dreieckigen oder dreieckähnlichen Flächenteils der Basisfläche 7 einen der Laufstreifenaußenseite zugewandten Stollenbereich 5c auf, welcher von insbesondere drei und insgesamt V-förmig verlaufenden, dreieckigen bzw. dreieckähnlichen Flanken 9c, im Beispiel einer mittigen Flanke 9c und zwei seitlichen Flanken 9c, begrenzt ist. Beim gezeigten Ausführungsbeispiel ist jede Flanke 9c mit einer Aushöhlung 11 versehen, die jeweils eine Öffnung 11a aufweist, die einen Großteil der Flankenfläche einnimmt, sodass zwischen den Öffnungen 11a der drei Aushöhlungen 11 nur schmale Stege 10 als Teile der Flanken 9c vorhanden sind. Bei der dargestellten Ausführung sind die Öffnungen 11a analog zu den Flanken 9c dreieckig oder dreieckähnlich gestaltet. Die Aushöhlungen 11 sind im Inneren des Stollens 5 von Flächen 11b begrenzt, welche annähernd den Seitenflächen einer dreiseitigen Pyramide oder eines dreiseitigen Pyramidenstumpfs entsprechen. Die mittige Flanke 9c ist derart gestaltet, dass sich die eine ihrer Dreieckspitzen bei der Basisfläche 7 befindet, eine Dreieckseite bei der Deckfläche 8, die seitlichen Flanken 9c weisen jeweils eine Dreieckseite bei der Basisfläche 7 auf und eine Dreieckspitze bei der Deckfläche 8. Die Stege 10 verlaufen unter einem Winkel im Wertebereich des Winkels α zu einer Senkrechten auf die Laufstreifenbasisfläche 2a und in Richtung zur Laufstreifenbasisfläche 2a abfallend.

Die Aushöhlungen 11 weisen eine Tiefe t auf, die vom theoretischen Niveau der Flanken 9c bzw. der "Ebene" der Öffnungen 11a in senkrechter Richtung ausgehend bis zur tiefsten Stelle ermittelt wird, quasi den Höhen der erwähnten dreiseitigen Pyramiden bzw. Pyramidenstümpfe entspricht und die 1,00 mm bis 5,00 mm beträgt. Die Höhe der Pyramidenstümpfe hängt von der Stollenhöhe ab. An Stollen 5 mit einer Höhe h₁ von 2,00 mm und 4,00 mm weisen die Aushöhlungen 11 eine Tiefe t von 1,00 mm bis 2,00 mm, an Stollen 5 mit einer Höhe h₁ von 4,00 mm bis 7,00 mm eine Tiefe t von 2,00 mm bis 4,00 mm, an Stollen 5 mit eine Höhe h₁ von 7,00 mm bis 11,00 mm eine Tiefe t von bis zu 5,00 mm auf.

Die Schulterstollen 5, die üblicherweise das größte Gummivolumen von allen Stollen im Laufstreifen besitzen, sind sie für eine gute Abstützung bei Kurvenfahrt oder entlang von Traversen auf unbefestigtem, unebenem Untergrund besonders wichtig. Durch die Aushöhlungen 11 wird relativ viel Gummimaterial an den der Seitenwand 3 zugewandten Stollenbereichen 5c der Schulterstollen 5 eingespart, ohne dass die Funktion der Schulterstollen 5 strukturell beeinträchtigt wird. Nachdem auch die Kontaktflächen der Schulterstollen 5 zum Untergrund durch diese Ausgestaltung nicht vermindert sind, werden weder die Griffeigenschaften noch die Laufleistung beeinträchtigt.

Bei alternativen Ausführungen ist der Stollenbereich 5c von insgesamt U-förmig oder trapezförmig verlaufenden Flanken begrenzt oder mitbegrenzt und es kann nur eine einzige Aushöhlung vorhanden sein. Möglich sind auch Ausführungen mit zwei oder mehr als drei Aushöhlungen. Die Ausgestaltung der Aushöhlungen kann von der dargestellten und beschriebenen abweichen, beispielsweise können runde Aushöhlungen mit runden Öffnungen vorgesehen sein.

Um bei neuen Fahrradreifen und über eine gewisse Laufleistung die Griffleistung bzw. die Griffeigenschaften der Schulterstollen 5 auf unbefestigtem, unebenem, losem oder schottrigem Untergrund zu verbessern, sind, wie insbesondere Fig. 3 zeigt, auf der Deckfläche 8 der Schulterstollen 5 jeweils zwei keilförmige, in Richtung zu den Stollenkanten 8b, daher in Richtung Seitenwand 3 bzw. Laufstreifenaußenseite, abfallende Erhebungen 12, 13 aus dem Gummimaterial der Schulterstollen 5 ausgebildet. Die Erhebungen 12, 13 sind in Draufsicht langgestreckt ausgebildete, parallel zueinander verlaufende Elemente, die sich auch parallel zu den Stollenkanten 8a, 8b der Deckfläche 8 erstrecken. Die Erhebungen 12, 13 weisen daher jeweils eine abfallende Keilfläche 12a, 13a als Deckfläche und vier (Erhebung 12) sowie drei (Erhebung 13) Seitenflächen auf, die insbesondere senkrecht zur Deckfläche 8 verlaufen. Die Erhebungen 12, 13 sind an der Keilfläche 12a, 13a von parallel zueinander und gerade verlaufenden Längsseiten 12b, 13b begrenzt, die unter dem Winkel β von 5° bis 30° und insbesondere parallel zu den Stollenkanten 8a, 8b verlaufen.

Die nachfolgend angegebenen Dimensionen der Erhebungen 12, 13 variieren innerhalb der jeweiligen Wertebereiche in Abhängigkeit von der Reifendimension und der jeweiligen Stollengröße.

Die Erhebung 12 ist in Draufsicht langgestreckt rechteckig gestaltet und weist auf der Deckfläche 8 zu den Stollenkanten 8a und 8c jeweils einen Abstand a₁ von 0,30 mm bis 1,20 mm, auf. Ihre parallel zu den Stollenkanten 8c ermittelte, konstante Breite b₁ beträgt in der Größenordnung von 2,00 mm bis 7,00 mm. Die keilförmige Erhebung 12 weist bei der Kante 8a ihre größte Höhe h₂ auf, welche 0,50 mm bis 2,50 mm, insbesondere bis 1,50 mm, beträgt, in Folge der Keilform verringert sich ihre Höhe in Richtung zur zweiten keilförmigen Erhebung 13 bis auf eine Höhe h₃ von 0,20 mm bis 1,50 mm.

Die Erhebung 13 befindet sich in einem insbesondere konstanten Abstand a₂ von 1,50 mm bis 4,00 mm von der Erhebung 12 und weist zwei seitliche Seitenflächen auf, die vorzugsweise der gebogenen Form der Seitenkanten 8c im Wesentlichen folgen. In Draufsicht betrachtet ist die Erhebung 13 bei der gezeigten Ausführung an den Verlauf der Seitenkanten 8c angepasst und verläuft zu diesen unter einem Abstand a₃ von 0,30 bis 1,00 mm. An ihrer breitesten Stelle weist die Erhebung 13 eine Breite im Wertebereich der erwähnten Breite b₁ von 2,00 mm bis 7,00 mm auf. Beide Erhebungen 12, 13 weisen jeweils eine größte Erstreckungslänge l₁, l₁'von 4,00 mm bis 12,00 mm auf, wobei sich bei der gezeigten Ausführung die Erstreckungslängen l₁, l₁' der Erhebungen 12, 13 voneinander unterscheiden.

Die Erhebung 13 weist an ihrer der Erhebung 12 zugewandten Seite eine Höhe h₄ von 0,20 mm bis 1,50 mm, insbesondere bis 0,70 mm, auf, ihre Keilfläche 13a fällt in Richtung zur laufstreifenaußenseitigen Kante 8b der Deckfläche 8 bis auf das Niveau der Deckfläche 8 ab und endet bevorzugt an dieser Kante 8b. Die Erhebungen 12, 13 stellen somit zusätzliche Griffkanten und Griffflächen zur Verfügung.

Bei einer alternativen Ausführung ist auf Schulterstollen 5 nur eine keilförmige und in Richtung zur Laufstreifenaußenseite abfallende Erhebung vorgesehen. Bei einer weiteren alternativen Ausführung sind auf Schulterstollen mehr als zwei, insbesondere drei, in Richtung zur Laufstreifenaußenseite abfallende Erhebungen ausgebildet.

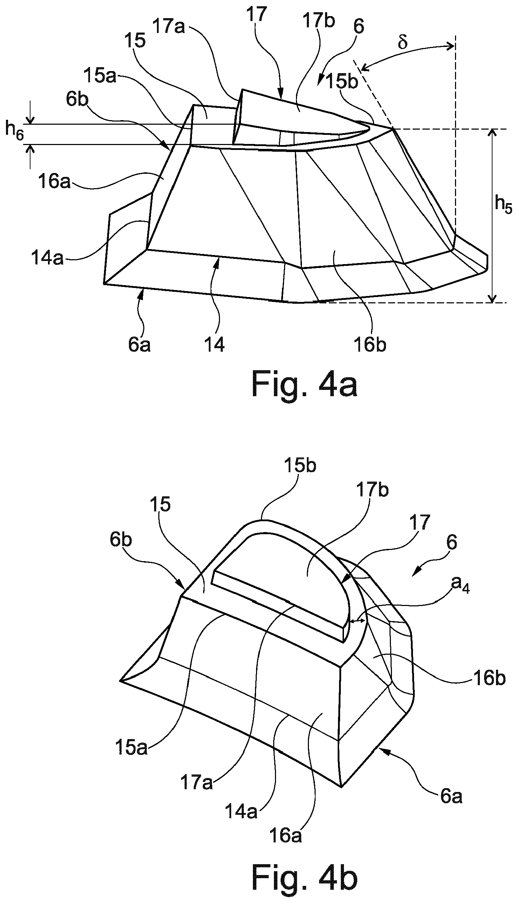

Die Ausgestaltung einer Ausführung eines mittigen Stollens 6 wird anhand der Fig. 1 und der Fig. 4a und 4b näher beschrieben. Dabei variieren die angegebenen Dimensionen innerhalb der jeweiligen Wertebereiche in Abhängigkeit von der Reifendimension und der jeweiligen Stollengröße. Die Stollenkörper 6a der mittigen Stollen 6 weisen jeweils parallel zur Laufstreifenbasisfläche 2a eine Basisfläche 14 und eine parallel zu dieser orientierte Deckfläche 15 auf, wobei die Basisfläche 14 und die Deckfläche 15 parallel zueinander verlaufende gerade Kanten 14a, 15a besitzen, die eine Länge von 4,00 mm bis 9,00 mm aufweisen und in axialer Richtung orientiert sind. Die Basisfläche 14 ist von der erwähnten geraden Kante 14a und weiteren mit dieser Kante 14a ein Polygon mit zumindest vier Ecken bildenden weiteren Kanten umlaufen. Die Deckfläche 15 ist von der Kante 15a und einer die Enden dieser Kante 15a verbindenden insgesamt gerundet bzw. bogenförmig verlaufenden Kante 15b umlaufen. Zwischen der Basisfläche 14 und der Deckfläche 15 verlaufen Flanken 16a, 16b, die relativ zu einer Senkrechten auf die Laufstreifenbasisfläche 2a geneigt sind, insbesondere unter einem spitzen Winkel δ von bis zu 40° und derart, dass sich der Stollenkörper 6b in Richtung zur Deckfläche 15 verjüngt. Es sind mittige Stollen 6 vorhanden, bei welchen die bogenförmig verlaufenden Kanten 15b in Draufsicht bezüglich der Kanten 15a symmetrisch gestaltet sind, oder wie beim mittigen Stollen 6 gemäß Fig. 4a und 4b gezeigt asymmetrisch gerundet verlaufen. Bei einer alternativen Ausführung bildet auch die Deckfläche 15 jeweils ein Polygon mit zumindest vier Ecken.

Die mittigen Stollen 6 weisen eine in senkrechter Richtung zur Laufstreifenbasisfläche 2a ermittelte, insbesondere konstante Höhe h₅ (Fig. 4a) von 2,00 mm bis 8,00 mm, insbesondere von 4,00 mm bis 7,00 mm, auf.

Auf jedem mittigen Stollen 6 ist jeweils eine keilförmig gestaltete, flache Erhebung 17 mit einer Keilfläche 17b als Deckfläche ausgebildet, wie im Folgenden anhand der Fig. 4a und 4b näher erläutert wird. Die in Draufsicht bevorzugt eine der äußeren Kontur der Deckfläche 15 angepasste Gestalt aufweisende Erhebung 17 weist senkrecht zur Deckfläche 15 verlaufende Seitenflächen und am Niveau der Deckfläche 15 zu den Kanten 15a, 15b der Deckfläche 15 einen Abstand a₄ von 0,30 mm bis 1,20 mm auf. Die Keilflächen 17b der Erhebungen 17 fallen bei der bevorzugten Ausführung an sämtlichen mittigen Stollen 6 in die gleiche Umfangsrichtung ab, wobei der Fahrradreifen derart am Fahrrad zu montieren ist, dass die Keilflächen 17b der Erhebungen 17 in Richtung des Abrollens des Fahrradreifens 1 bei Vorwärtsfahrt (Pfeil U in Fig. 1) abfallen. Die Keilflächen 17b der Erhebungen 17 weisen ferner jeweils eine parallel zur Kante 14a verlaufende Kante 17a auf, an welcher die Erhebung 17, senkrecht zur Deckfläche 15 ermittelt, ihre größte Höhe h₆ von 0,50 mm bis 2,50 mm aufweist. Die Keilfläche 17b fällt entweder bis auf das Niveau der Deckfläche 15 ab oder weist gemäß einer alternativen Ausführung an ihrem der Kante 17a abgewandten Ende noch eine gewisse Höhe in der Größenordnung von bis zu 0,20 mm auf.

### Bezugszeichenliste

- 1: Fahrradreifen
- 2: Laufstreifen
- 2a: Laufstreifenbasisfläche
- 3: Seitenwand
- 4: Wulstbereich
- 5: Schulterstollen
- 5a: Stollensockel
- 5b: Stollenkörper
- 5c: Stollenbereich
- 6: mittiger Stollen
- 6a: Stollensockel
- 6b: Stollenkörper
- 7: Basisfläche
- 8: Deckfläche
- 8a, 8b: Stollenkante
- 8c: Seitenkante
- 9a, 9b₁, 9b₂: Flanke
- 9c: Flanke
- 10: Steg
- 11: Aushöhlung
- 11a: Öffnung
- 11b: Fläche
- 12, 13: keilförmige Erhebung
- 12a, 13a: Keilfläche
- 14: Basisfläche
- 14a: Kante
- 15: Deckfläche
- 15a, 15b: Kante
- 16a, 16: Flanke
- 17: keilförmige Erhebung
- 17a: Kante
- 17b: Keilfläche
- h₁: Höhe des Schulterstollens 5
- h₂, h: Höhen der Erhebung 12
- h₄: Höhe der Erhebung 13
- h₅: Höhe der Stollen 6
- h₆: Höhe der Erhebung 17
- t: Tiefe der Aushöhlung 11
- b₁: Breite der Erhebung 12
- a₁, a₂, a₃, a: Abstand
- α: Winkel der Flanken 9a, 9b₁, 9b₂, 9c
- β: Winkel der Stollen 5 zur Umfangsrichtung
- β': Winkel der Längskanten der Keilflächen 12b, 13b
- δ: Winkel der Flanken 16a, 16b
- l₁, l₁': Erstreckungslängen der Erhebungen 12, 13
- U: Umfangsrichtung (Abrollrichtung)

## Patentansprüche

1. Fahrradreifen (1) mit einem Laufstreifen (2) mit einer Laufstreifenbasisfläche (2a) und einer Profilierung aus voneinander beabstandeten Stollen, zu welchen Schulterstollen (5) und mittige Stollen (6) gehören, wobei die Schulterstollen (5) jeweils eine parallel oder im Wesentlichen parallel zur Laufstreifenbasisfläche (2a) verlaufende Deckfläche (8) aufweisen,
**dadurch gekennzeichnet,**
**dass** auf der Deckfläche (8) von Schulterstollen (5) zumindest eine keilförmige, eine Keilfläche (12a, 13a) als Deckfläche aufweisende Erhebung (12, 13) ausgebildet ist, deren Keilfläche (12a, 13a) in Richtung zur Laufstreifenaußenseite abfällt und, in Draufsicht und in der Umfangsrichtung des Laufstreifens betrachtet, langgestreckt gestaltet ist.

2. Fahrradreifen (1) nach Anspruch 1, **dadurch gekennzeichnet, dass** sich die Erhebung (12, 13) zur Umfangsrichtung unter einem Winkel (β) von 5° bis 30° erstreckt.

3. Fahrradreifen (1) nach Anspruch 1 oder 2, **dadurch gekennzeichnet, dass** auf der Deckfläche (8) von Schulterstollen (5) zumindest zwei, insbesondere genau zwei, derartige Erhebungen (12, 13) ausgebildet sind, die in Richtung zur Laufstreifenaußenseite aufeinanderfolgen.

4. Fahrradreifen (1) nach einem der Ansprüche 1 bis 3, **dadurch gekennzeichnet, dass** die Keilfläche (12a, 13a) jeder Erhebung (12, 13) zwei insbesondere parallele und gerade verlaufende Längskanten (12b, 13b) aufweist, welche zur Umfangsrichtung unter dem Winkel (β) von 5° bis 30° geneigt sind.

5. Fahrradreifen (1) nach Anspruch 3 oder 4, **dadurch gekennzeichnet, dass** die Längskanten (12b, 13b) der Keilflächen (12a, 13a) sämtlicher Erhebungen (12, 13) parallel zueinander verlaufen.

6. Fahrradreifen (1) nach einem der Ansprüche 1 bis 5, **dadurch gekennzeichnet, dass** bei zwei oder mehr Erhebungen diese Erhebungen (12, 13) an der Deckfläche (8) unter einem Abstand (a₂) zueinander angeordnet sind, welcher 1,50 mm bis 4,00 mm beträgt und insbesondere konstant ist.

7. Fahrradreifen (1) nach einem der Ansprüche 1 bis 6, **dadurch gekennzeichnet, dass** die Erhebung(en) (12, 13) an der Deckfläche (8) zum Rand der Deckfläche (8) unter einem Abstand (a₁) angeordnet ist bzw. sind, welcher bis zu 1,20 mm, insbesondere 0,30 mm bis 1,20 mm beträgt.

8. Fahrradreifen (1) nach einem der Ansprüche 1 bis 7, **dadurch gekennzeichnet, dass** die Erhebung(en) (12, 13) eine Breite (b₁) von 2,00 mm bis 7,00 mm und eine Erstreckungslänge (l₁, l₁') von 4,00 mm bis 12,00 mm aufweisen.

9. Fahrradreifen (1) nach einem der Ansprüche 1 bis 8, **dadurch gekennzeichnet, dass** auf Schulterstollen (5) zumindest eine Erhebung (13) ausgebildet ist, deren Keilfläche(13a) bis auf Niveau der Deckfläche (8) des Stollens (5) abfällt.

10. Fahrradreifen (1) nach einem der Ansprüche 1 bis 9, **dadurch gekennzeichnet, dass** bei zwei oder mehr Erhebungen (12, 13) die von der Laufstreifenaußenseite am weitesten entfernt befindliche Erhebung (12) laufstreifeninnenseitig eine senkrecht zur Deckfläche (8) des Schulterstollens (5) ermittelte Höhe (h₂) von 0,50 mm bis 2,50 mm, insbesondere bis 1,50 mm, aufweist, wobei sich die Höhe der Erhebung (12) in Richtung zur nächsten keilförmigen Erhebung (13) um mindestens 0,20 mm verringert.

11. Fahrradreifen (1) nach einem der Ansprüche 1 bis 10, **dadurch gekennzeichnet, dass** die der Laufstreifenaußenseite am nächsten befindliche Erhebung (13) ) laufstreifeninnenseitig eine senkrecht zur Deckfläche (8) des Schulterstollens (5) ermittelte Höhe (h₄) von 0,20 mm bis 1,50 mm, insbesondere bis 0,70 mm, aufweist, wobei die Höhe der Erhebung (13) in Richtung zur Laufstreifenaußenseite bis auf das Niveau der Deckfläche (8) abfällt.
